(19) Europäisches Patentamt
European Patent Office
Office européen des brevets

(11) **EP 4 652 355 B1**

(12) **EUROPEAN PATENT SPECIFICATION**

(45) Date of publication and mention
of the grant of the patent:
**01.07.2026 Bulletin 2026/27**

(21) Application number: **24730781.2**

(22) Date of filing: **17.05.2024**

(51) International Patent Classification (IPC):
*E21C 50/00* (2006.01)     *E21F 13/04* (2006.01)
*E02F 3/90* (2006.01)     *E02F 3/94* (2006.01)
*F04B 47/04* (2006.01)     *F04F 1/08* (2006.01)
*E21B 43/36* (2006.01)

(52) Cooperative Patent Classification (CPC):
**E21C 50/00; E21B 43/36; E21F 13/042;
F04B 47/04; F04F 1/08;** E02F 3/90; E02F 3/94;
E02F 7/005

(86) International application number:
**PCT/IB2024/054835**

(87) International publication number:
**WO 2024/241183 (28.11.2024 Gazette 2024/48)**

(54) **DUMP VALVE ARRANGEMENT**

ABLASSVENTILANORDNUNG

AGENCEMENT DE VANNE DE DÉCHARGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **19.05.2023 GB 202307527**

(43) Date of publication of application:
**26.11.2025 Bulletin 2025/48**

(73) Proprietor: **Weir Minerals Netherlands B.V.**
**5928 PH Venlo (NL)**

(72) Inventor: **VAN RIJSWICK, Rudolfus**
**5973 PV Lottum (NL)**

(74) Representative: **MacLeod, Roderick William**
**The Weir Group PLC**
**1 West Regent Street**
**Glasgow G2 1RW (GB)**

(56) References cited:
**EP-A1- 2 226 466         WO-A1-2011/072963**
**WO-A1-2023/156873     WO-A2-2020/016716**
**US-A- 3 522 670          US-A- 4 391 468**
**US-A1- 2003 205 384**

• **MORTON JESSE: "Innovation Gives New-level
Results, Big Wins | E & MJ", 1 July 2023
(2023-07-01), XP093180637, Retrieved from the
Internet <URL:https://www.e-mj.com/features/
innovation-gives-new-level-results-big-wins/>**

## Description

### FIELD OF INVENTION

This invention relates to a dump valve arrangement and particularly to a dump valve arrangement for use with a hydraulic ore hoisting system ("HOHS"). It further relates to a method of operating a dump valve arrangement, particularly in an HOHS.

### BACKGROUND OF THE INVENTION

In an HOHS, a pump arrangement pumps ore into and up a discharge riser connected thereto. One such application of an HOHS is in seabed mining.

One type of pump arrangement which is used, which is particularly suitable for use in pumping medium containing relatively large particles, is a pressure exchange chamber ("PEC") based pumping system. A PEC typically includes at least one pressure chamber (sometimes in the form of an elongated pipe) having a medium or pumped fluid valve arrangement at one end and a driving fluid valve arrangement at the other end. The medium valve arrangement includes a medium inlet valve whereby medium to be pumped can be admitted into the PEC and a medium outlet valve which is connected in flow communication with the discharge riser to enable pumped medium to be fed into the discharge riser. Similarly, the driving fluid valve arrangement includes a driving fluid inlet valve through which a high-pressure driving fluid can be admitted into the PEC via a driving riser, and a driving fluid outlet valve whereby driving fluid can be discharged from the PEC.

In use, medium to be pumped may be fed to the medium inlet valve at a relatively low pressure by means of a medium delivery pump, such as a centrifugal pump. With the medium inlet valve open and the driving fluid outlet valve open medium enters the pressure chamber and displaces driving fluid out of the pressure chamber through the driving fluid outlet valve.

When the PEC has been charged with medium, i.e., a desired quantity of medium has entered the PEC, the medium inlet valve and driving fluid outlet valve are closed. The medium outlet valve and the driving fluid inlet valve are opened such that driving fluid enters the PEC at high pressure and displaces the medium out of the PEC through the medium outlet valve and into the discharge riser. The exact sequence and timing associated with the opening and closing of the valves may vary to optimise operation of the pumping system.

Once the medium has been discharged from the PEC the medium outlet valve and driving fluid inlet valve close and the medium inlet valve and the driving fluid outlet valve open to charge the PEC with medium in the manner described above.

Usually, the PEC pumping system includes a plurality of chambers (typically, but not always, in the form of pipes) which are arranged in parallel and the sequence of operation of the medium or pumped fluid valve arrangements and the driving fluid valve arrangements is selected such that medium is fed to the discharge riser on a continuous basis. As result, the medium in the riser is moving upwardly continuously and the solid particles remain suspended in the liquid and are transported up the discharge riser.

The discharge riser may be relatively long, i.e., of the order of several thousand metres, depending on the depth at which the mining operations are performed.

If, for any reason, the feed of medium to the discharge riser is interrupted, e.g., because of a system trip, solids in the medium contained in the discharge riser will start to settle under the influence of gravity and could form a self-jamming plug at the bottom of the discharge riser. If this occurs returning the HOHS to operation may not be possible without removing and clearing the discharge riser, which is time consuming, inefficient, and very expensive.

In an attempt to avoid the formation of a plug, prior art systems make use a full-bore dump valve arrangement which comprises a dump valve connected directly in flow communication with the discharge riser near the bottom thereof. In the event of a system trip or dump event, the dump valve opens to discharge the medium from the discharge riser.

One problem with this arrangement is that if the valve opens too slowly there is a risk of the discharge riser becoming blocked when settling solids stack up against the dump valve before it is opened sufficiently to permit the passage of solids contained in the medium through the valve.

Another problem with this arrangement is that if the valve is opened too quickly then the discharge riser may decompress in an explosive manner which could result a severe water hammer pulse travelling through the discharge riser and the dynamic forces could potentially be destructive to the HOHS. In addition, extremely high velocities of medium flow through the dump valve when fully opened could lead to rapid substantial erosional wear, possibly prohibiting re-use of the dump valve after a dumping event.

It is an object of an embodiment of this invention to provide means which may ameliorate this problem or provide a useful alternative.

US 2003/205384 A1 discloses oil and gas fluid production from ultra-deep offshore wells using a vertical liquid/vapor separator and a riser assembly.

WO 2011/072963 A1 discloses gas hydrate production having a riser for lifting the gas to the surface.

EP 2 226 466 discloses a method for producing a marketable hydrocarbon composition from a methane hydrate deposit located beneath the seabed.

US 3,522,670 discloses first and second dump valve mechanisms used for deep sea mining.

## SUMMARY OF THE INVENTION

This summary is provided to introduce a selection of concepts that are further described in the detailed description below. This summary is not intended to identify indispensable features of the claimed subject matter, nor is it intended for use as an aid in limiting the scope of the claimed subject matter.

In this application ordinal numbers (first, second, third, etc.) are assigned arbitrarily herein, and are used to differentiate between parts, and do not indicate a particular order, sequence, or importance.

Features listed with respect to one aspect are intended to be options for use with other aspects, unless such a combination is not possible.

According to a first aspect there is provided a dump valve arrangement for use with a discharge riser as set forth in claim 1.

The dump valve may be located in an upper portion of the settling chamber, in the lower portion of the discharge riser, or in a coupling (such as a pipe) between the settling chamber and the discharge riser.

Optionally, the outlet includes a discharge valve, where the discharge valve is displaceable between a closed position in which it inhibits the flow of medium from the settling chamber through the outlet and an open position in which it permits the flow of medium from the settling chamber through the outlet.

Optionally, the compression input is in fluid communication with a high pressure output from a driving fluid riser. Optionally, the compression input is in fluid communication with a high pressure output from a pressure exchange chamber that feeds the discharge riser. In such embodiments, the settling chamber is pressurised when both the dump valve the discharge valve are closed to maintain a pressure in the settling chamber at a pressure which corresponds approximately to the pressure at the lower portion of the discharge riser.

The compression input may pressurise the settling chamber to substantially the same pressure as the pressure at the lower portion of the discharge riser.

Optionally, the decompression output includes a decompression valve in flow communication with the settling chamber, which allows a controlled decompression of both the settling chamber and the connected discharge riser upon opening of the dump valve before opening the discharge valve.

By virtue of this aspect, the dump valve arrangement provides controlled decompression and prevents high pressure differentials across any valve in its open position or when opening when solids are present, which would otherwise introduce wear and/or clogging. The dump valve moves in the presence of some solids, but without any significant pressure differential. The decompression valve is opened when a pressure differential is present, but without a significant amount of solids present. The discharge valve is opened without a significant pressure differential and without a significant amount of solids present.

The dump valve arrangement ma be used with a discharge riser fed by any convenient pump arrangement, such as a pressure exchange chamber.

According to a second aspect there is provided a hydraulic ore hoisting system comprising: (i) a hydraulic discharge riser having a lower end and an upper end; (ii) an inlet leading into the discharge riser and in flow communication with a pressurised supply of medium to be hoisted; and (iii) a dump valve arrangement according to the first aspect and configured to permit a controlled decompression of the discharge riser during a dump event before solids are discharged from the system.

In typical embodiments, during normal operation of the hydraulic ore hoisting system ("HOHS"), the dump valve, discharge valve and decompression output will be closed, and the HOHS will operate in a conventional manner as described above. Medium to be hoisted will be fed under pressure into the discharge riser through the inlet and will flow upwardly in the discharge riser in the normal manner. The settling chamber is isolated from the discharge riser by the dump valve and is pressurised at a pressure which corresponds approximately with the pressure at a lower portion of the discharge riser.

In the event of a trip, however, where the feed of medium to the discharge riser is interrupted, or the rate of feed is substantially decreased, such that solids in the medium in the discharge riser settle downwardly under the influence of gravity, the dump valve is opened.

Once the dump valve is opened, the solids in the medium that are settling do not settle at the bottom of the discharge riser but instead pass through the dump valve into the settling chamber preventing a build-up of solids at the bottom of the discharge riser. By maintaining the discharge riser and the settling chamber at approximately the same pressure, no (or only a relatively minor) shock wave is generated when the dump valve is opened to connect the settling chamber in flow communication with the discharge riser.

When the dump valve is open, the decompression valve is opened and the pressure in the settling chamber can decrease in a controlled manner which avoids the generation of a potentially damaging shock wave. After the decompression valve is opened and the pressure in the settling chamber has decreased sufficiently the discharge valve can be opened thereby permitting the solids to be discharged from the settling chamber.

Once the discharge valve is opened, the decompression valve can optionally be closed again. This prevents solids from passing through the decompression valve, which could wear, and potentially block, this valve.

To control the downward velocity in the discharge riser upon decompression an optional additional flow resistance downstream of an upper end of the settling chamber may be used. The optional additional flow resistance may be located at any location in the flow path from the settling chamber through the discharge valve to a dump valve arrangement outlet. The use of such a flow resistance is of particular advantage in onshore systems such an HOHS from an underground mine. In a sub-sea HOHS, the ambient pressure around the lower portion of the discharge riser is high due to hydrostatic pressure so the discharge riser empties the medium into a pressurised sub-sea environment. In contrast, in a land-based HOHS the ambient pressure around the lower portion of the discharge riser is low (atmospheric pressure), so the discharge riser empties the medium at generally atmospheric pressure. This could result in extremely high flow velocities of the medium as it is being emptied. The additional flow resistance would limit the downward velocity in the discharge riser to acceptable levels.

The HOHS may include a pumping arrangement which is connected to the inlet of the discharge riser and configured to supply pressurised medium to the discharge riser. The pumping arrangement may be a PEC pumping system.

The settling chamber may be positioned below the discharge riser (in some embodiments co-axially aligned therewith) such that when the dump valve is opened the settling chamber effectively forms a downward extension of the discharge riser. This allows solids settling in the discharge riser to flow downwardly under the influence of gravity into the settling chamber.

The settling chamber may be elongate, bulbous, tortuous, or have any other convenient shape.

Preferably, the length and width (which may be a diameter) of the settling chamber is selected so that the time taken for medium in the discharge riser to reach the discharge valve exceeds the time taken to decompress the settling chamber.

The compression input may include, or be coupled to, a pressurising bypass line extending between the settling chamber and the pressurised driving fluid or pumped medium of the PEC. The pressurising bypass line bypasses the dump valve to ensure that the settling chamber is pressurised to a similar pressure as a lower portion of the discharge riser. An advantage with using the driving fluid to pressurise the settling chamber is that it is essentially free of solid particles which could potentially block the balancing line.

The decompression output may be configured to permit a controlled decompression of the settling chamber and accordingly a reverse flow velocity (i.e. a velocity of solids falling under the influence of gravity) of solids in the medium in the discharge riser to a steady state dump flow when the dump valve and the discharge valve are both fully opened and the decompression output is active (e.g. where the decompression output includes a decompression valve, then that valve is open). In one embodiment, the decompression valve may comprise a cone valve providing an increasing cross-sectional area for medium flow when moving from the closed to the open position, thereby providing the desired gradual increase in flow to permit controlled decompression.

Optionally, at least one of the dump valve, discharge valve and decompression valve is biased towards its open position and includes retaining means configured to retain the valve releasably in its closed position to ensure fail safe operation of the valve. Optionally, each of the dump valve, discharge valve and decompression valve is biased towards its open positions but held in their closed positions during normal **HOHS** operation (i.e. when there is not a dump event).

Optionally, the dimensions of the settling chamber are selected such that the decompression valve and the discharge valve can be displaced to their fully open positions before the settling solids reach the discharge valve. In particular, the settling chamber may have a length sufficiently long that the time taken for solids entering the settling chamber to reach the bottom of the chamber is greater than the time taken for the decompression valve and the discharge valve to be displaced to their fully opened positions.

The settling chamber may have a larger diameter than the discharge riser to provide a greater volume of the settling chamber for a given settling length thereby increasing the volume of medium that can be discharged from the discharge riser into the settling chamber during decompression, thereby providing additional time for the decompression to take place.

According to a third aspect there is provided a method of emptying medium from a discharge riser during a trip event as set forth in claim 10.

Optionally, the removal criterion comprises either: (i) most of the settling solids have been removed from the discharge riser, or (ii) all of the medium has been removed from the discharge riser.

The step of pressurising a settling chamber may comprise pressurising the settling chamber to, or near, a pressure in the lower portion of the discharge riser.

The step of detecting a trip event may be implemented by a controller coupled to a pressure exchange chamber that feeds the discharge riser with medium.

The step of detecting a trip event may be active (or direct), for example, by a control system detecting a state indicative of a trip event. Alternatively, or additionally, the step of detecting a trip event may be passive (or indirect), for example, by detecting a loss of power.

The step of reducing a pressure differential between the settling chamber and a dump area outside the settling chamber may be implemented using a decompression output. The decompression output may include a decompression valve.

The dump area may be located on a sea bed underneath the discharge riser. Where the HOHS is installed on land, the dump area may be a pit, a pond for waste water, or any other convenient location.

## BRIEF DESCRIPTION OF THE DRAWINGS

These and other aspects of the invention will now be described, by way of example, with reference to the accompanying diagrammatic drawings, in which:

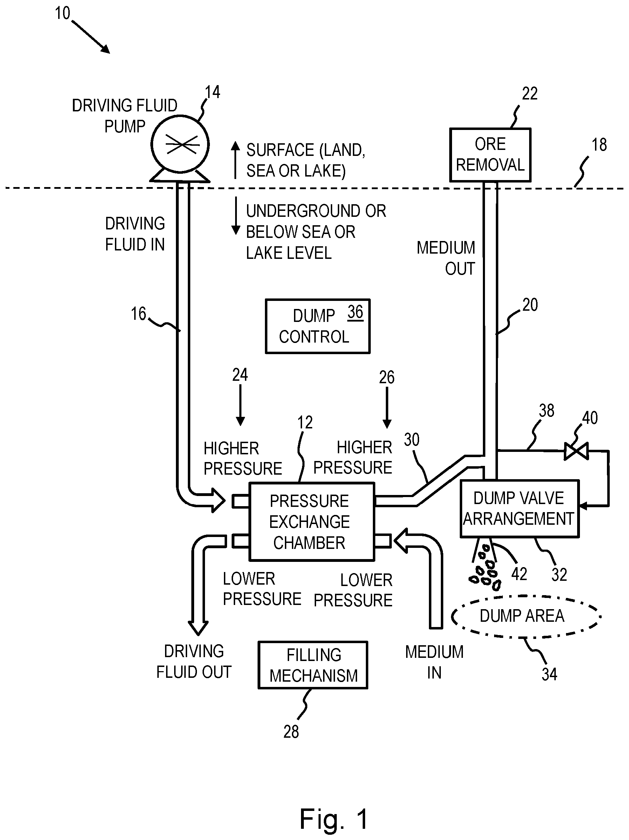

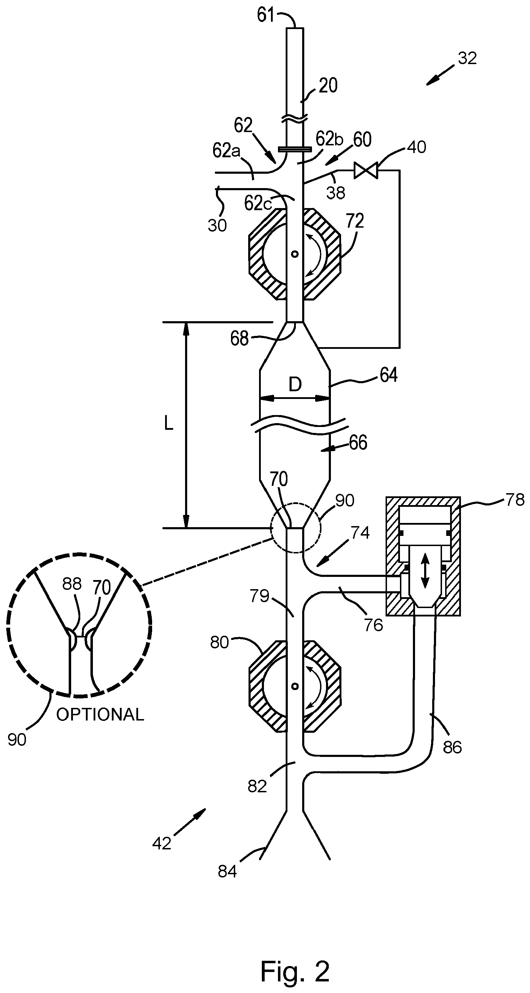

Figure 1 is a schematic arrangement of an HOHS including a dump valve arrangement in accordance with one embodiment of the present invention; and Figure 2 shows, on an enlarged scale, the dump valve arrangement of Figure 1.

In Figure 1 of the drawings, reference numeral 10 refers generally to a hydraulic ore hoisting system ("HOHS") in accordance with one embodiment of the invention. The HOHS 10 comprises a pressure exchange chamber (PEC) 12. In typical embodiments, all of the PEC 12 is located at a lower altitude than a final delivery point at which a medium is to be delivered by the HOHS 10. The medium typically comprises ore particles suspended in liquid. In this embodiment, the HOHS 10 is a subsea system, the PEC 12 is located at or near the sea bed, the ore comprises polymetallic nodules, and the liquid carrier comprises sea water. Other embodiments may be land based or on a bed of a freshwater lake or an estuary.

The PEC 12 is coupled to a driving fluid pump 14 via a driving fluid riser 16. The driving fluid pump 14 (which is a positive displacement pump in this embodiment) is located on a surface 18 at a raised level, and a discharge riser 20 extends from the PEC 12 up to the surface 18. The discharge riser 20 delivers medium raised from the PEC 12 to an ore removal station 22 that dewaters the ore (polymetallic nodules in this embodiment) in the medium.

The PEC 12 comprises a pump chamber (not shown in detail) that has a valve arrangement 24, 26 at each end thereof, referred to as a driving fluid valve arrangement 24 and a pumped medium valve arrangement 26. The operation of a PEC 12 is known. A suitable PEC is described in PCT application number PCT/IB2019/055957, in the name of the present applicant, Weir Minerals Netherlands B.V. In brief, the PEC 12 is filled with medium at relatively low pressure by a filling mechanism 28, such as a centrifugal pump. The PEC 12 is then pressurised and high pressure driving fluid from the driving fluid pump 14 urges the medium in the PEC 12 out of a PEC medium output line 30 and up the discharge riser 20 to the surface 18.

A unique feature of the HOHS 10 is that there is a dump valve arrangement 32 provided at a lower portion (the bottom) of the discharge riser 20. The dump valve arrangement 32 is used to purge the discharge riser 20 in the event of a failure or malfunction of the HOHS 10 (a trip event) that results in medium in the discharge riser 20 that cannot be delivered to the surface level. If not purged, the solid particles (nodules) in the medium would settle to the bottom of the discharge riser 20 and clog the discharge riser 20. Purged (or emptied) medium is deposited in a dump area, shown by broken ellipse 34.

A dump control circuit 36 is provided that monitors the operation of the PEC 12 to ensure that the dump valve arrangement 32 is adequately pressurised during normal operation, to detect when a trip event occurs, and transmit a trip signal to the dump valve arrangement 32. In some embodiments, the trip detection circuit 36 may be incorporated into a PEC controller (not shown).

A pressurising bypass line 38 connects the dump valve arrangement 32 with a lower portion (or bottom) of the discharge riser 20 (which is coupled to the high pressure PEC output line 30). The pressurising bypass line 38 includes a compression valve 40 that is opened when part of the dump arrangement 32 is to be pressurised, as described in more detail below. The pressurising bypass line 38 operates as a compression input.

An outlet 42 is provided at the lower portion of the dump valve arrangement 32 through which purged (or emptied) medium is deposited at the dump area 34.

The features of the dump valve arrangement 32 are shown in more detail in Figure 2, and the operation of this dump valve arrangement 32 will now be described with reference thereto.

The discharge riser 20 has a lower end 60 and an upper end 61. A splitter inlet 62 is provided at the lower end 60 in flow communication with the PEC medium output line 30 to receive medium therefrom via a medium inlet pipe portion 62a. **The** splitter inlet 62 diverts received medium through an upper (medium hoisting) pipe portion 62b leading into the discharge riser 20.

**The** dump valve arrangement 32 includes an elongate housing 64 co-axial with the discharge riser 20 and defining an elongate settling chamber 66 therein. **The** settling chamber 66 has an upper end 68 and a lower end 70. **The** upper end 68 is connected to the lower end 60 of the hydraulic riser and a dump valve 72 is provided therebetween. **In** this embodiment, the dump valve 72 comprises a ball valve, but in other embodiments, a different type of valve may be used.

**The** settling chamber 66 is positioned immediately below the discharge riser 20 and extends vertically downwards thereby effectively forming a downward extension of the discharge riser 20.

The dump valve 72 may be located at the upper end 68 of the settling chamber 66, within the lower portion of the discharge riser 20, or in a pipe therebetween.

The splitter inlet 62 also has a lower (medium dumping) pipe portion 62c connected to the dump valve 72.

The dump valve 72 is closed during normal operation of the HOHS 10 so that medium does not pass therethrough. However, during a trip event (described below) the dump valve 72 is opened to allow medium to flow freely from the discharge riser 20, through the splitter inlet pipe portions 62b and 62c and then through the dump valve 72. The dump valve 72 is positioned as close as possible to the splitter inlet 62 to minimise sedimentation on top of the valve 72.

The lower end or outlet 70 of the settling chamber 66 is downwardly open and leads to a decompression splitter 74. The decompression splitter 74 defines a lateral decompression path 76 to a decompression valve 78, which is usually closed during normal operation of the HOHS (i.e. when there is no trip event). The decompression valve 78 comprises an actuated cone valve that provides an increasing cross-sectional flow area when the valve is opening, thereby allowing for an increase in the flow rate of fluid through the decompression valve 78 as it opens.

The decompression path 76 on its own, or in combination with the decompression valve 78 forms a decompression output.

Decompression valve 78 regulates the flow of medium through the settling chamber outlet 70 during decompression thereof but is typically closed, so that the settling chamber 66 remains pressurised, until a trip event occurs.

The decompression splitter 74 defines a downwardly open discharge path 79 to the outlet 42, which includes a discharge valve 80, a discharge junction 82, and a flared exit 84. The discharge valve 80 is a ball valve in this embodiment, although another type of valve could be used instead. The discharge valve 80 is typically closed so that the settling chamber 66 remains pressurised, until a trip event occurs. Once opened, any medium passing through the discharge valve 80 is emptied at the dump area 34.

The discharge junction 82 couples the output line (or pipe) 86 of the decompression valve 78, the output of the discharge valve 80 and the ambient environment at the flared exit 84 (which in this embodiment is sea water at or near the sea bed).

The decompression valve 78 is in a bypass arrangement around the discharge valve 80 so that when the decompression valve 78 is open the settling chamber 66 reduces in pressure prior to the discharge valve 80 being opened. The decompression valve 78 is in flow communication, when the decompression valve 78 is open, with the discharge junction 82

At the start of operation of the HOHS 10, each of the dump valve 72, the decompression valve 78, and the discharge valve 80 is closed to prevent fluid flow therethrough and to enable the settling chamber 66 to be sufficiently pressurised and ready for use when a trip event occurs.

When the PEC 12 is driving medium up the discharge riser 20, the dump control circuit 36 opens the compression valve 40 for long enough to pressurise the settling chamber 66 to approximately the same pressure as the pressure at the upper (medium hoisting) pipe portion 62b. This may be determined based on timing (the compression valve 40 being open for a defined time period) or feedback from a pressure sensor sensing the pressure in the settling chamber 66.

Once the settling chamber 66 is sufficiently pressurised, the compression valve 40 may be closed.

The HOHS 10 then operates normally and the medium pumped from the PEC 12 passes through the PEC medium output line 30 and into the discharge riser 20. The velocity of the medium is such that the medium and the solids (nodules) forming part thereof are transported up the discharge riser 20.

However, in the event that the velocity of the medium in the discharge riser 20 decreases to a velocity or flow rate below which the solids contained in the medium will settle under gravity, then the dump control circuit 36 detects this as a trip event. The dump control circuit 36 may also detect a trip event if at some point during operation of the HOHS 10 there is a problem with the PEC 12. A loss of power will also be detected as a trip event by the dump control circuit 36, which may then passively initiate a dump sequence.

In response to this detected trip event, the dump control circuit 36 opens the dump valve 72, which connects the discharge riser 20 and the settling chamber 66 in flow communication, thereby causing the contents of the discharge riser 20 to fall into the settling chamber 66 as a result of the gravitational force on the medium in the discharge riser 20.

Only a relatively minor shockwave (or sometimes no shockwave at all) is generated when the dump valve 72 is opened because the pressure in the settling chamber 66 is at approximately the same pressure as in the discharge riser 20.

The decompression valve 78 is opened at the same time as, or shortly after, the dump valve 72 is opened. This reduces the pressure in the settling chamber 66 and also the discharge riser 20 in a controlled manner, particularly because of the use of a cone valve as the decompression valve 78.

Once the pressure in the settling chamber 66 is reduced sufficiently, for example, close to or at the pressure at the dump area 34 (ambient pressure under the dump valve arrangement 32), the discharge valve 80 is opened and then the decompression valve 78 is closed. This ensures that the medium in the settling chamber 66 exits the dump valve arrangement 32 to the dump area 34 via the discharge valve 80 and not via the decompression valve 78.

In this embodiment, the elongate housing 64 has a generally bulbous or laterally expanded appearance; however, the lower end 70 narrows to define a similar cross sectional area to the cross-sectional area of the discharge riser 20.

The settling chamber 66 has a length L and a width (or diameter) D, the combination of which are selected such that the time taken for the above sequence of operations, namely for the dump valve 72 to open, for the decompression valve 78 to open, the pressure within the settling chamber 66 to reduce and for the discharge valve 80 to open, is less than the time taken for the solids to settle or flow through the settling chamber 66 and reach the bottom of the settling chamber 66. When a diameter D is selected that is at least three times the diameter of the discharge riser 20 then the following calculation of the length L may be useful:

$$L \geq (t1 + t2 + t3).vs$$

where:

t1 is the time taken for the dump valve 72 to open;
t2 is the time taken to reduce the pressure in the settling chamber 66 to a pressure at which the discharge valve 80 can be opened;
t3 is the time taken for the discharge valve 80 to open; and
vs is the solids velocity, i.e. the velocity at which the solids move downwardly.

The solids velocity (vs) is combination of the mixture velocity (vm) and the settling velocity of the solids within the carrier fluid.

The mixture velocity (vm) is also influenced by the diameter D of the settling chamber 66. Hence, both length L as well as diameter D of the settling chamber 66 are important considerations in the sizing of the settling chamber 66.

In this embodiment, the Length L is selected as at least 15 metres, but optionally, at least 20 metres or at least 25 metres.

In this embodiment, the settling chamber 66 has a diameter D which is at least twice, in some embodiments at least three times the diameter of the discharge riser 20.

In other embodiments, the pressurising bypass line 38 may be connected to a lower portion of the driving fluid riser 16 so that relatively clean fluid is used to pressurise the settling chamber 66.

An HOHS 10 in accordance with this embodiment will, during a trip or dump event, allow a controlled decompression of the pressurised riser to minimise the dynamic effects of water hammer and to minimise the erosional wear on the valves by solids being dumped. This will permit repetitive dump events to take place without compromising the integrity of the HOHS 10 while reducing the risk of plug formation in the discharge riser 20.

The HOHS 10 may be transported in kit form then assembled where the HOHS 10 is to be installed.

Where an HOHS is to be installed and used on dry land, the ambient pressure around the lower portion of the dump valve arrangement 32 is low (atmospheric pressure), so the discharge riser 20 empties the medium against low pressure. This could result in extremely high flow velocities of the medium as it is being emptied. To reduce the effect of this, an additional flow restrictor 88 is provided for a land based HOHS. This is shown in enlarged area 90 in Figure 2, which is not required for a deep sea embodiment, but when used provides an alternative embodiment of the dump valve arrangement 32 for a land based system. The flow restrictor 88 is effectively a reduced diameter orifice at the lower end 70 of settling chamber 66. This limits the downward velocity of medium in the discharge riser 20 to acceptable levels. The flow restrictor 88 may comprise a local short restriction (such as an orifice) or a longer small diameter pipe (i.e. an extended pipe having a reduced diameter). Both of these are able to create sufficient flow resistance to limit the downward flow velocity in the discharge riser 20. The flow restrictor 88 may be located at one (or more than one) of several positions in the dump valve arrangement. For example, a flow restrictor 88 may be located: (i) downstream of the settling chamber 66 and upstream of the decompression splitter 74, as shown in Figure 2; (ii) downstream of the decompression splitter 74 and upstream of the discharge valve 80; (iii) downstream of the discharge valve 80 and upstream of the discharge junction 82; (iv) downstream of the discharge junction 82. The flow restrictor 88 may be located at any position in the flow path from the settling chamber 66 through the discharge valve 80 to the flared exit 84.

In other embodiments, the dump valve arrangement 32 may be used with a discharge riser 20 fed by a different pump arrangement to that of Figure 1.

## LIST OF REFERENCE NUMERALS

Hydraulic ore hoisting system (HOHS) 10
Pressure exchange chamber (PEC) 12
Driving fluid pump 14
Driving fluid riser 16
Surface (at raised level) 18
Discharge riser 20
Ore removal station 22
Driving fluid valve arrangement 24
Pumped medium valve arrangement 26
Filling mechanism 28
PEC medium output line 30
Dump valve arrangement 32
Dump area 34.
Dump control circuit 36
Pressurising bypass line 38
Compression valve 40
Outlet (of dump valve arrangement) 42
Lower end (of discharge riser) 60
Upper end (of discharge riser) 61
Splitter inlet (of discharge riser) 62

Medium inlet pipe portion 62a
Upper (medium hoisting) pipe portion 62b
Lower (medium dumping) pipe portion 62c

Housing 64
Settling chamber 66

Upper end (of settling chamber) 68
Lower end (of settling chamber) 70

Dump valve 72
Decompression splitter 74
Decompression path 76
Decompression valve 78
Discharge path 79
Discharge valve 80
Discharge junction 82
Flared exit 84
Output line or pipe (of decompression valve) 86
Flow restrictor 88
Alternative embodiment enlarge portion 90

**Claims**

1. A dump valve arrangement (32) for use with a discharge riser (20) for receiving medium including solids, the dump valve arrangement (32) comprising:

   (i) a settling chamber (66) configured to couple to a lower portion (60) of the discharge riser (20),
   (ii) a splitter inlet (62) located at the lower portion (60) of the discharge riser (20) above the settling chamber (66), and operable to direct medium into the discharge riser (20);
   (iii) a dump valve (72) operable to permit, in response to a trip event, or prevent the flow of medium from the discharge riser (20) into the settling chamber (66);
   (iv) a compression input to the settling chamber (66) to pressurise the settling chamber (66) to reduce a pressure differential between the settling chamber (66) and the lower portion (60) of the discharge riser (20) prior to opening the dump valve (72);
   (v) a decompression path (76) including a decompression valve (78) to reduce the pressure in the settling chamber (66) after the dump valve (72) has opened; and
   (vi) an outlet (42) for emptying the contents of the settling chamber (66) onto a dump area (34) once the pressure in the settling chamber (66) has reduced sufficiently,
   **characterised in that**: the dump valve (72) is located below the splitter inlet (62), and the compression input to the settling chamber (66) includes a pressurising bypass line (38) including a compression valve (40).

2. The dump valve arrangement of claim 1, wherein the compression input pressurises the settling chamber (66) to substantially the same pressure as the pressure at the lower portion (60) of the discharge riser (20).

3. The dump valve arrangement of claim 1 or 2, wherein the outlet (42) comprises a discharge valve (80) displaceable between a closed position in which it inhibits the flow of medium from the settling chamber (66) through the outlet (42) and an open position in which it permits the flow of medium from the settling chamber (66) through the outlet (42).

4. The dump valve arrangement of any of claims 1 to 3, wherein the compression input is in fluid communication with a high pressure output (30) from a pressure exchange chamber (12) that feeds the discharge riser (20).

5. The dump valve arrangement of claim 1, wherein the decompression valve (78) comprises a cone valve providing a desired gradual increase in flow to permit controlled decompression.

6. The dump valve arrangement of claim 3, wherein the decompression path further comprises a bypass arrangement around the discharge valve (80) so that when the decompression valve (78) is open the settling chamber (66) reduces in pressure prior to the discharge valve (80) being opened.

7. The dump valve arrangement of any preceding claim, further comprising a flow resistance (88) downstream of an upper end (68) of the settling chamber (66).

8. The dump valve arrangement of any preceding claim, wherein the settling chamber (66) is elongate and is located below the discharge riser (20) and co-axially aligned therewith, such that when the dump valve (72) is opened the settling chamber (66) effectively forms a downward extension of the discharge riser (20).

9. A hydraulic ore hoisting system (10) comprising: (i) a hydraulic discharge riser (20) having a lower end and an upper end; (ii) an inlet (62a) leading into the discharge riser (20) and in flow communication with a pressurised supply of medium to be hoisted; and (iii) a dump valve arrangement (32) according to any preceding claim and configured to permit a controlled decompression of the discharge riser (20) during a dump event before solids are discharged from the system (10).

10. A method of emptying medium from a discharge riser (20) during a trip event, the method comprising:

    (i) using a splitter inlet (62) to direct medium including solids up the discharge riser (20);
    (ii) pressurising a settling chamber (66) below the splitter inlet (62) and coupled to a lower portion of the discharge riser (20);
    (iii) detecting a trip event leading to settling of solids in the discharge riser (20);
    (iv) permitting, in response to the detected trip event, the flow of medium from the discharge riser (20) into the settling chamber (66);

(v) reducing a pressure differential between the settling chamber (66) and a dump area (34) outside the settling chamber (66); and

(vi) emptying the medium from the settling chamber (66) into the dump area (34) until most of the solids or all of the medium has been removed from the discharge riser (20).

11. A method according to claim 10, wherein the step of pressurising the settling chamber (66) comprises pressurising the settling chamber (66) to, or near, a pressure in the lower portion of the discharge riser (20).

12. A method according to claim 10 or 11, wherein step of detecting a trip event is implemented by a controller coupled to a pressure exchange chamber (12) that feeds the discharge riser (20) with medium.

**Patentansprüche**

1. Ablassventilanordnung (32) zur Verwendung mit einer Austragssteigleitung (20) zum Aufnehmen eines Mediums, das Feststoffe enthält, wobei die Ablassventilanordnung (32) umfasst:

(i) eine Absetzkammer (66), die zum Verbinden mit einem unteren Abschnitt (60) der Austragssteigleitung (20) ausgebildet ist,

(ii) einen Verteilereinlass (62), der sich an dem unteren Abschnitt (60) der Austragssteigleitung (20) oberhalb der Absetzkammer (66) befindet und dazu betriebsfähig ist, Medium in die Austragssteigleitung (20) zu leiten;

(iii) ein Ablassventil (72), das dazu betriebsfähig ist, als Reaktion auf ein Auslöseereignis den Durchfluss von Medium aus der Austragssteigleitung (20) in die Absetzkammer (66) zu ermöglichen oder zu verhindern;

(iv) einen Kompressionseingang in die Absetzkammer (66) zum Beaufschlagen der Absetzkammer (66) mit Druck, um eine Druckdifferenz zwischen der Absetzkammer (66) und dem unteren Abschnitt (60) der Austragssteigleitung (20) vor dem Öffnen des Ablassventils (72) zu verringern;

(v) einen Druckentlastungsweg (76), der ein Druckentlastungsventil (78) aufweist, zum Verringern des Drucks in der Absetzkammer (66) nach dem Öffnen des Ablassventils (72); und

(vi) einen Auslass (42) zum Entleeren des Inhalts der Absetzkammer (66) auf einen Ablassbereich (34), sobald der Druck in der Absetzkammer (66) ausreichend verringert ist,

**dadurch gekennzeichnet, dass**: das Ablassventil (72) unterhalb des Verteilereinlasses (62) angeordnet ist und der Kompressionseingang in die Absetzkammer (66) eine Druck-Bypassleitung (38) mit einem Kompressionsventil (40) aufweist.

2. Ablassventilanordnung nach Anspruch 1, wobei der Kompressionseingang die Absetzkammer (66) so mit Druck beaufschlagt, dass der Druck im Wesentlichen gleich dem Druck an dem unteren Abschnitt (60) der Austragssteigleitung (20) ist.

3. Ablassventilanordnung nach Anspruch 1 oder 2, wobei der Auslass (42) ein Austragsventil (80) umfasst, das zwischen einer geschlossenen Stellung, in der es den Durchfluss von Medium aus der Absetzkammer (66) durch den Auslass (42) hemmt, und einer geöffneten Stellung, in der es den Durchfluss von Medium aus der Absetzkammer (66) durch den Auslass (42) ermöglicht, verschiebbar ist.

4. Ablassventilanordnung nach einem der Ansprüche 1 bis 3, wobei der Kompressionseingang in Fluidverbindung mit einem Hochdruckausgang (30) aus einer Druckaustauschkammer (12) steht, die die Austragssteigleitung (20) versorgt.

5. Ablassventilanordnung nach Anspruch 1, wobei das Druckentlastungsventil (78) ein Kegelventil umfasst, das eine gewünschte graduelle Erhöhung des Durchflusses bereitstellt, um eine kontrollierte Druckentlastung zu ermöglichen.

6. Ablassventilanordnung nach Anspruch 3, wobei der Druckentlastungsweg weiter eine Bypassanordnung um das Austragsventil (80) herum umfasst, sodass bei geöffnetem Druckentlastungsventil (78) der Druck in der Absetzkammer (66) verringert wird, bevor das Austragsventil (80) geöffnet wird.

7. Ablassventilanordnung nach einem der vorstehenden Ansprüche, weiter umfassend einen Strömungswiderstand (88) stromabwärts eines oberen Endes (68) der Absetzkammer (66).

8. Ablassventilanordnung nach einem der vorstehenden Ansprüche, wobei die Absetzkammer (66) langgestreckt ist und sich unterhalb der Austragssteigleitung (20) befindet und koaxial damit ausgerichtet ist, sodass bei geöffnetem Ablassventil (72) die Absetzkammer (66) effektiv eine nach unten gerichtete Verlängerung der Austragssteigleitung (20) bildet.

9. Hydraulisches Erzfördersystem (10), umfassend: (i) eine hydraulische Austragssteigleitung (20) mit einem unteren Ende und einem oberen Ende; (ii) einen Einlass (62a), der in die Austragssteigleitung (20) führt und in Strömungsverbindung mit einem unter Druck stehenden Vorrat eines zu fördernden Mediums steht; und (iii) eine Ablassventilanordnung (32) nach einem der vorstehenden Ansprüche, die dazu ausgebildet ist, eine kontrollierte Druckentlastung der Austragssteigleitung (20) während eines Ablassereignisses zu ermöglichen, bevor Feststoffe aus dem System (10) ausgetragen werden.

10. Verfahren zum Entleeren von Medium aus einer Austragssteigleitung (20) während eines Auslöseereignisses, wobei das Verfahren umfasst:

    (i) Verwenden eines Verteilereinlasses (62), um das Medium, das Feststoffe enthält, in der Austragssteigleitung (20) nach oben zu leiten;
    (ii) Druckbeaufschlagen einer Absetzkammer (66), die sich unterhalb des Verteilereinlasses (62) befindet und mit einem unteren Abschnitt der Austragssteigleitung (20) verbunden ist;
    (iii) Erfassen eines Auslöseereignisses, das zum Absetzen von Feststoffen in der Austragssteigleitung (20) führt;
    (iv) Ermöglichen, als Reaktion auf das erfasste Auslöseereignis, des Durchflusses von Medium aus der Austragssteigleitung (20) in die Absetzkammer (66);
    (v) Verringern einer Druckdifferenz zwischen der Absetzkammer (66) und einem Ablassbereich (34) außerhalb der Absetzkammer (66); und
    (vi) Entleeren des Mediums aus der Absetzkammer (66) in den Ablassbereich (34), bis der größte Teil der Feststoffe oder das gesamte Medium aus der Austragssteigleitung (20) entfernt ist.

11. Verfahren nach Anspruch 10, wobei der Schritt des Druckbeaufschlagens der Absetzkammer (66) ein Druckbeaufschlagen der Absetzkammer (66) auf einen oder beinahe auf einen Druck im unteren Abschnitt der Austragssteigleitung (20) umfasst.

12. Verfahren nach Anspruch 10 oder 11, wobei der Schritt des Erfassens eines Auslöseereignisses durch eine Steuereinheit umgesetzt wird, die mit einer Druckaustauschkammer (12) verbunden ist, die die Austragssteigleitung (20) mit Medium versorgt.

## Revendications

1. Agencement de vanne de décharge (32) destiné à être utilisé avec une colonne montante de refoulement (20) pour recevoir un fluide contenant des solides, l'agencement de vanne de décharge (32) comprenant :

    (i) une chambre de décantation (66) configurée pour se coupler à une partie inférieure (60) de la colonne montante de refoulement (20),
    (ii) une entrée de séparateur (62) située au niveau de la partie inférieure (60) de la colonne montante de refoulement (20) au-dessus de la chambre de décantation (66), et servant à diriger le fluide dans la colonne montante de refoulement (20) ;
    (iii) une vanne de décharge (72) servant à permettre, en réponse à un événement de déclenchement, ou à empêcher l'écoulement du fluide depuis la colonne montante de refoulement (20) vers la chambre de décantation (66) ;
    (iv) une entrée de compression vers la chambre de décantation (66) pour mettre sous pression la chambre de décantation (66) afin de réduire un différentiel de pression entre la chambre de décantation (66) et la partie inférieure (60) de la colonne montante de refoulement (20) avant l'ouverture de la vanne de décharge (72) ;
    (v) un trajet de décompression (76) comprenant une vanne de décompression (78) pour réduire la pression dans la chambre de décantation (66) après l'ouverture de la vanne de décharge (72) ; et
    (vi) une sortie (42) pour vider le contenu de la chambre de décantation (66) sur une zone de décharge (34) une fois que la pression dans la chambre de décantation (66) a suffisamment baissé,
    **caractérisé en ce que** : la vanne de décharge (72) est située en dessous de l'entrée de séparateur (62), et l'entrée de compression vers la chambre de décantation (66) comprend une conduite de dérivation de mise sous pression (38) comprenant une vanne de compression (40).

2. Agencement de vanne de décharge de la revendication 1, dans lequel l'entrée de compression met sous pression la chambre de décantation (66) à une pression sensiblement identique à la pression au niveau de la partie inférieure (60) de la colonne montante de refoulement (20).

3. Agencement de vanne de décharge de la revendication 1 ou 2, dans lequel la sortie (42) comprend une vanne de refoulement (80) déplaçable entre une position fermée dans laquelle elle empêche l'écoulement du fluide depuis la chambre de décantation (66) à travers la sortie (42) et une position ouverte dans laquelle elle permet l'écoulement du fluide depuis la chambre de décantation (66) à travers la sortie (42).

4. Agencement de vanne de décharge de l'une quelconque des revendications 1 à 3, dans lequel l'entrée de compression est en communication fluidique avec une sortie haute pression (30) provenant d'une chambre d'échange de pression (12) qui alimente la colonne montante de refoulement (20).

5. Agencement de vanne de décharge de la revendication 1, dans lequel la vanne de décompression (78) comprend une vanne à cône assurant une augmentation progressive souhaitée du débit afin de permettre une décompression contrôlée.

6. Agencement de vanne de décharge de la revendication 3, dans lequel le trajet de décompression comprend en outre un agencement de dérivation contournant la vanne de refoulement (80) de sorte que, lorsque la vanne de décompression (78) est ouverte, la pression dans la chambre de décantation (66) diminue avant que la vanne de refoulement (80) ne s'ouvre.

7. Agencement de vanne de décharge de l'une quelconque des revendications précédentes, comprenant en outre une résistance à l'écoulement (88) en aval d'une extrémité supérieure (68) de la chambre de décantation (66).

8. Agencement de vanne de décharge de l'une quelconque des revendications précédentes, dans lequel la chambre de décantation (66) est allongée et est située en dessous de la colonne montante de refoulement (20) et alignée coaxialement avec celle-ci, de sorte que, lorsque la vanne de décharge (72) est ouverte, la chambre de décantation (66) forme efficacement un prolongement vers le bas de la colonne montante de refoulement (20).

9. Système hydraulique d'extraction de minerai (10) comprenant : (i) une colonne montante de refoulement hydraulique (20) comportant une extrémité inférieure et une extrémité supérieure; (ii) une entrée (62a) débouchant dans la colonne montante de refoulement (20) et en communication fluidique avec une alimentation sous pression du fluide à extraire ; et (iii) un agencement de vanne de décharge (32) selon l'une quelconque des revendications précédentes, configuré pour permettre une décompression contrôlée de la colonne montante de refoulement (20) lors d'un événement de décharge avant que les solides ne soient refoulés du système (10).

10. Procédé de vidage d'un fluide d'une colonne montante de refoulement (20) lors d'un événement de déclenchement, le procédé comprenant :

(i) l'utilisation d'une entrée de séparateur (62) pour diriger un fluide contenant des solides vers le haut de la colonne montante de refoulement (20) ;
(ii) la mise sous pression d'une chambre de décantation (66) située en dessous de l'entrée de séparateur (62) et couplée à une partie inférieure de la colonne montante de refoulement (20) ;
(iii) la détection d'un événement de déclenchement entraînant la sédimentation des solides dans la colonne montante de refoulement (20) ;
(iv) la permission, en réponse à l'événement de déclenchement détecté, de l'écoulement du fluide depuis la colonne montante de refoulement (20) vers la chambre de décantation (66) ;
(v) la réduction d'un différentiel de pression entre la chambre de décantation (66) et une zone de décharge (34) située à l'extérieur de la chambre de décantation (66) ; et
(vi) le vidage du fluide de la chambre de décantation (66) vers la zone de décharge (34) jusqu'à ce que la plupart des solides ou la totalité du fluide ait été éliminée de la colonne montante de refoulement (20).

11. Procédé selon la revendication 10, dans lequel l'étape de mise sous pression de la chambre de décantation (66) consiste à mettre sous pression la chambre de décantation (66) à une pression égale ou proche d'une pression dans la partie inférieure de la colonne montante de refoulement (20).

12. Procédé selon la revendication 10 ou **11,** dans lequel l'étape de détection d'un événement de déclenchement est mise en œuvre par un dispositif de commande couplé à une chambre d'échange de pression (12) qui alimente en fluide la colonne montante de refoulement (20).

10

DRIVING FLUID
PUMP

14

↑ SURFACE (LAND,
SEA OR LAKE)

22

ORE
REMOVAL

18

DRIVING
FLUID IN

↓ UNDERGROUND OR
BELOW SEA OR
LAKE LEVEL

MEDIUM
OUT

16

DUMP 36
CONTROL

20

24

26

38

40

HIGHER
PRESSURE

12

HIGHER
PRESSURE

30

PRESSURE
EXCHANGE
CHAMBER

DUMP VALVE
ARRANGEMENT

LOWER
PRESSURE

LOWER
PRESSURE

42

32

DRIVING
FLUID OUT

FILLING
MECHANISM

MEDIUM
IN

DUMP AREA

34

28

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003205384 A1
- WO 2011072963 A1
- EP 2226466 A
- US 3522670 A